# EUROPEAN PATENT APPLICATION

(11) **EP 4 837 763 A1**
(43) Date of publication of application: **11.11.2026**
(21) Application number: 26177206.5
(22) Date of filing: 07.05.2026
(51) Int. Cl.: B60K 11/08

(54) **EXTERNAL ACTIVE AIR INTAKE GRILLE**

(30) Priority: 08.05.2025 CN 202520890754 U
(71) Applicant: Röchling Automotive SE, 68165 Mannheim (DE)
(72) Inventor: Shen, Jian Ping, Kunshan, 215347 (CN)
(74) Representative: Ullrich & Naumann PartG mbB

(57) **Abstract**

The present application provides an external active air intake grille, comprising a grille frame, a slat assembly arranged in the grille frame, a drive shaft connected to the slat assembly, and a drive mechanism for driving the drive shaft to rotate; the drive mechanism is arranged at two sides of the drive shaft, the drive shaft comprises a first drive shaft and a second drive shaft, the first drive shaft and the second drive shaft being connected to each other via a universal coupling, and operation of the drive mechanism drives the drive shaft to rotate, thereby driving a slat to open and close in the grille frame.

## Description

The present application relates to the technical field of automotive air intake grilles, in particular to an external active air intake grille.

An air intake grille is also known as the face of a motor vehicle or vehicle front styling, as well as the radiator guard, etc. Its main function is to ensure the intake of air for ventilation of components such as the radiator, engine and air conditioning, while preventing external objects from damaging components in the engine compartment during travel, as well as embellishing the front of the vehicle and projecting individuality. An active air intake grille is an automotive air intake grille that can automatically adjust its degree of opening. In external active air intake grilles currently on the market, the overall span of the grille slats is limited, and the structural styling of the slats is generally limited to horizontal and vertical designs, so there is a lack of structural variety, and the driving mechanism for the slats is arranged in the middle or at one side. Linear grille styling is simple, but with the diversification of consumer aesthetics, it is now struggling to win consumer favour. Moreover, when the slat driving mechanism is arranged in the middle of the grille, a blocking plate needs to be provided in the middle of the grille to conceal the driving mechanism, for the sake of the overall aesthetics of the grille. Consequently, even when the slats are completely open, the blocking plate section in the middle of the grille remains in a closed state, preventing complete opening of the grille in a true sense, and thus affecting the final air intake area of the grille.

Thus, the question of how to achieve aesthetic styling of an external grille while maximizing the air intake area of the grille is a technical problem currently in need of a solution.

The present application provides an external active air intake grille which changes the monotonous styling of linear strip-shaped slats currently on the market, making the grille more aesthetic overall, while also ensuring that maximized grille air intake volume is not affected.

The objective of the present application is achieved through the following technical solution:
An external active air intake grille, comprising a grille frame, a slat assembly arranged in the grille frame, a drive shaft connected to the slat assembly, and a drive mechanism for driving the drive shaft to rotate; the drive mechanism is arranged at two sides of the drive shaft, the drive shaft comprises a first drive shaft and a second drive shaft, the first drive shaft and the second drive shaft being connected to each other via a universal coupling, and operation of the drive mechanism drives the drive shaft to rotate, thereby driving a slat to open and close in the grille frame.

Preferably, the slat assembly is snap-fitted in the grille frame, and a back side thereof is connected to the drive shaft via a connecting rod.

Preferably, the drive mechanism is an electric motor, respectively connected to the first drive shaft and the second drive shaft.

Preferably, the slat assembly comprises a first slat assembly and a second slat assembly, the second slat assembly and the first slat assembly overlapping at one end thereof.

Preferably, the first slat assembly and the second slat assembly are arranged symmetrically with the overlapping end as a centre.

Preferably, a surface of the slat assembly exhibits a uniform distribution of diamond shapes.

Preferably, the grille frame comprises a grille outer frame, and a grille inner frame snap-fitted in the grille outer frame.

The beneficial effects of the present application are reflected in the following: In the present application, the slats are diamond-shaped, which is more aesthetic and offers more choice for grille styling. The problem of incomplete closure of grille slats with a long span is also solved, and the electric motors are concealed at two sides of the back of the grille, enabling the grille to have maximum air intake volume when the slats are completely open, increasing the engine air intake volume and thus achieving the effect of increasing range.

To explain the technical solution of embodiments of the present application more clearly, the drawings that need to be used in the description of embodiments are briefly described below. Obviously, the drawings in the description below are some embodiments of the present application, and other drawings could be obtained by those skilled in the art on the basis of these drawings without inventive effort.
- Fig. 1:: a schematic drawing of the three-dimensional structure of the present application.
- Fig. 2:: a structural schematic drawing of the back of the present application, with some of the drive shaft concealed.
- Fig. 3:: a schematic drawing of the connection relationships between the slat assembly and the drive shaft of the present application.
- Fig. 4:: an exploded drawing of the present application.
- Fig. 5:: shows schematically the connection relationship between the universal coupling and two drive shafts of the present application.

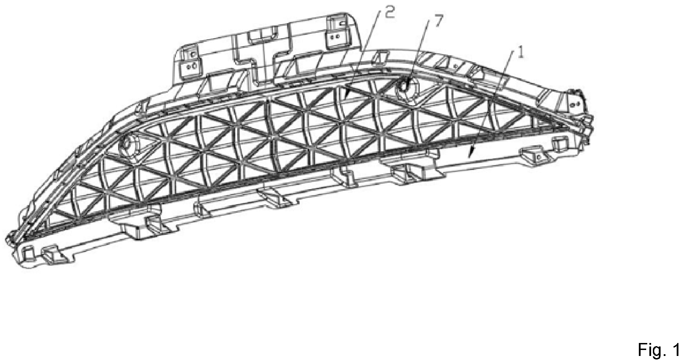

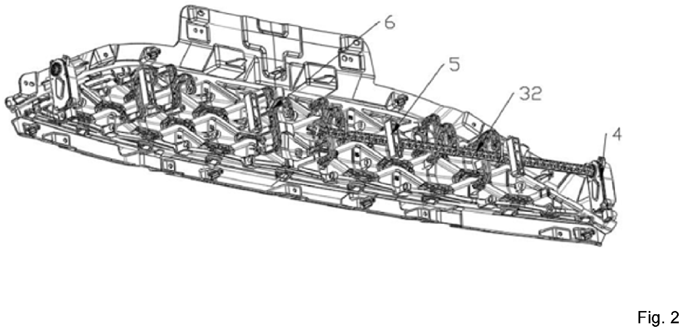

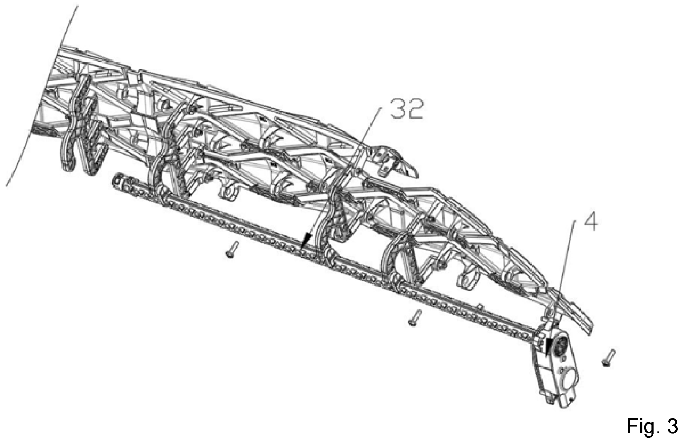

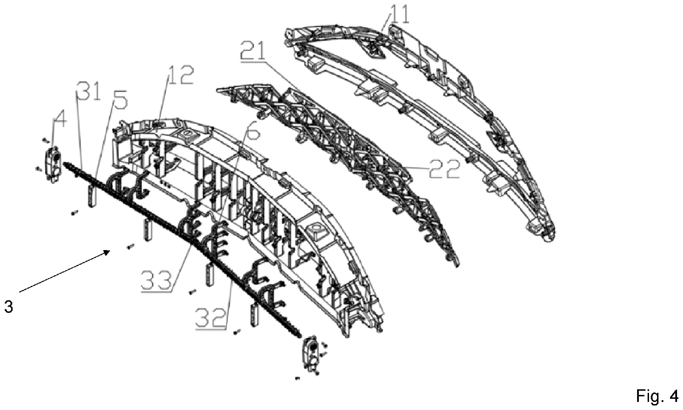

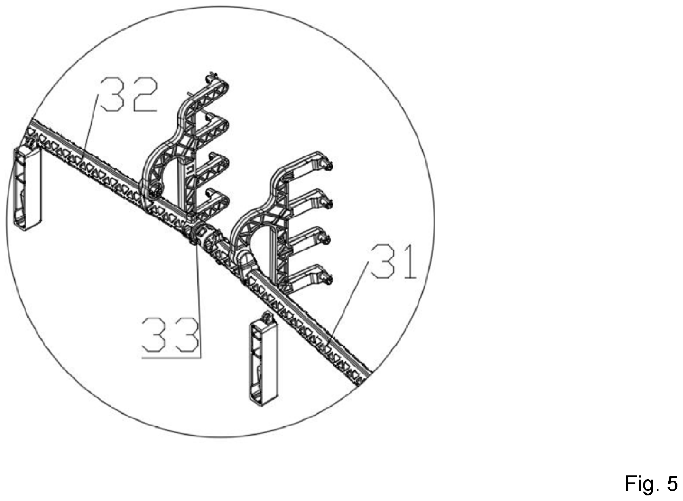

To clarify the objective, technical solution and advantages of the present application, the present application is described in further detail below in conjunction with Figs. 1 - 5 and embodiments. It should be understood that the specific embodiments described here are merely intended to explain the present application without limiting it.

The present application proposes an external active air intake grille, comprising a grille frame 1, a slat assembly 2 arranged in the grille frame 1, a drive shaft 3 connected to the slat assembly 2, and a drive mechanism 4 for driving the drive shaft 3 to rotate. The grille frame 1 is formed of a grille outer frame 11, and a grille inner frame 12 fixed in the grille outer frame 11 by snap-fitting. In this embodiment, the grille frame 1 has a bow-shaped cross section. The slat assembly 2 is formed of multiple diamond-shaped slats; by "diamond-shaped" is meant that the external shape is a rhombus, with an upwardly protruding middle part. Of course, other shapes of the slats are possible. Mounting holes 7 for mounting radar probes are optionally provided on the slats.

The slat assembly 2 is snap-fitted in the grille inner frame 12, and comprises a first slat assembly 21 and a second slat assembly 22. The second slat assembly 22 and the first slat assembly 21 overlap at one end thereof, and are arranged symmetrically with the overlapping end as a centre. A connecting ring is provided on a back side of the slat assembly, the connecting ring being connected to a connecting rod 6, and another end of the connecting rod 6 being connected to the drive shaft 3. When the drive shaft 3 rotates, it will drive the connecting rod 6 to pull a slat to flip over. The way in which the slat is driven to flip over for opening and closing is conventional, and not described again here.

The drive shaft 3 comprises a first drive shaft 31 and a second drive shaft 32. The first drive shaft 31 forms a connection to the first slat assembly 12 via multiple connecting rods 6, and similarly, the second drive shaft 32 forms a connection to the second slat assembly 22 via multiple connecting rods. The first drive shaft 31 and the second drive shaft 32 are connected to each other via a universal coupling 33. Another end of the first drive shaft 31 and another end of the second drive shaft 32 are each connected to a drive mechanism 4, the drive mechanism 4 being an electric motor. The electric motors at the two sides are fixed by screws to two sides of the back of the grille frame, and concealed by the grille frame 1. Thus, when the slats are completely open, the air intake volume of the grille is fully maximized. In this embodiment, a cover plate 5 is provided behind the drive shaft. The cover plate 5 is connected to the grille inner frame, and the drive shaft is arranged between the grille inner frame and the cover plate 5.

When the two electric motors operate, they will respectively drive the first drive shaft 31 and the second drive shaft 32 to rotate. Due to the universal coupling 33 between the two drive shafts 31, 32, synchrony of rotation between the two drive shafts 31, 32 can be effectively ensured, thereby achieving synchrony between the two slat assemblies 21, 22 during opening and closing. Moreover, the fact that the two drive shafts 31, 32 are driven separately also effectively solves the problem of incomplete closure between slats with a long span due to the use of single drive in the prior art. Since the issue of incomplete closure of slats with a long span is solved, possibilities are opened up for further grille slat configurations.

The principles of electrical control connections between the external active air intake grille of the present application and the vehicle end are not the focus of the present application, so are not described again here.

Finally, it should be explained that the orientation or position relationships indicated by terms such as "up", "down", "left", "right", "vertical", "horizontal", "inner" and "outer" are based on the orientation or position relationships shown in the drawings, and are merely intended to facilitate and simplify description of the present application, without indicating or implying that the apparatus or element referred to must have a specific orientation or be constructed and operated in a specific orientation, so should not be construed as limiting the present application. In addition, the terms "first", "second" and "third" are merely used for descriptive purposes, and should not be construed as indicating or implying relative importance.

Moreover, the embodiments above are merely intended to illustrate the technical solution of the present application, without limiting it. Although the present application has been described in detail with reference to the above embodiments, those skilled in the art will understand that they can still make modifications to the technical solutions recorded in the above embodiments, or make equivalent substitutions of some of the technical features therein; and these modifications or substitutions will not cause the substance of the corresponding technical solutions to depart from the spirit and scope of the technical solutions of the embodiments of the present application.

### List of reference signs

- 1: grille frame
- 2: slat assembly
- 3: drive shaft
- 4: drive mechanism
- 5: cover plate
- 6: connecting rod
- 7: Mounting holes
- 11: grille outer frame
- 12: grille inner frame
- 21: first slat assembly
- 22: second slat assembly
- 31: first drive shaft
- 32: second drive shaft
- 33: universal coupling

## Claims

1. External active air intake grille, comprising a grille frame (1), a slat assembly (2) arranged in the grille frame (1), a drive shaft (3) connected to the slat assembly (2), and a drive mechanism (4) for driving the drive shaft (3) to rotate; the drive mechanism (4) is arranged at two sides of the drive shaft (3), the drive shaft (3) comprises a first drive shaft (31) and a second drive shaft (32), the first drive shaft (31) and the second drive shaft (32) being connected to each other via a universal coupling (33), and operation of the drive mechanism (4) drives the drive shaft (3) to rotate, thereby driving a slat to open and close in the grille frame (1).

2. External active air intake grille according to Claim 1, **characterized in that** the slat assembly (2) is snap-fitted in the grille frame (1), and a back side thereof is connected to the drive shaft (3) via a connecting rod (6).

3. External active air intake grille according to Claim 1, **characterized in that** the drive mechanism (4) is an electric motor, respectively connected to the first drive shaft (31) and the second drive shaft (32).

4. External active air intake grille according to Claim 1, **characterized in that** the slat assembly (2) comprises a first slat assembly (21) and a second slat assembly (22), the second slat assembly (22) and the first slat assembly (21) overlapping at one end thereof.

5. External active air intake grille according to Claim 4, **characterized in that** the first slat assembly (21) and the second slat assembly (22) are arranged symmetrically with the overlapping end as a centre.

6. External active air intake grille according to Claim 1, **characterized in that** a surface of the slat assembly (2) exhibits a uniform distribution of diamond shapes.

7. External active air intake grille according to Claim 1, **characterized in that** the grille frame (1) comprises a grille outer frame (11), and a grille inner frame (12) snap-fitted in the grille outer frame (11).
